# EUROPEAN PATENT APPLICATION

(11) **EP 3 821 983 A1**
(43) Date of publication of application: **19.05.2021**
(21) Application number: 19918256.9
(22) Date of filing: 23.09.2019
(51) Int. Cl.: B02C 19/00, B02C 23/00

(54) **DUAL-PURPOSE POWDER GRINDING MACHINE AND WORKING METHOD THEREFOR**

(30) Priority: 04.03.2019 CN 201910161100
(71) Applicant: Shenzhen Elemex Technology, Ltd, Shenzhen, Guangdong 518000 (CN)
(72) Inventor: LIU, Alex, Beaverton, Oregon 97005 (US); LIU, Hongjin, Shenzhen, Guangdong 518000 (CN)
(74) Representative: Petraz, Gilberto Luigi
(86) International application number: PCT/CN2019/107332
(87) International publication number: WO 2020/177299

(57) **Abstract**

A dual-purpose grinder and an operating method thereof. The grinder includes a material container assembly. The material container assembly includes a grinding head (12, 27) fixedly connected to a material container body (10, 20), and a grinding sleeve (15, 26) rotatably connected to the grinding head; the grinding head is fitted in the grinding sleeve, and the grinding head and the grinding sleeve define therebetween a material compartment for accommodating materials; and a connecting structure capable of being connected to an external power assembly is arranged at an upper end of the material container body. According to the dual-purpose grinder, the material container assembly can be individually used to enable manual grinding, the material container assembly can also be combined with the external power assembly to form an automatic grinder, the grinding head and the grinding sleeve move relative to each other by rotation of the material container body, and grinding can be divided into a manual mode and an automatic mode, so as to meet requirements of different users.

## Description

The present application is based on a Chinese patent application No. 201910161100.5 filed on March 4, 2019, and claims its priority. The entire disclosure of the application is incorporated herein by reference in its entirety.

### TECHNICAL FIELD

The present application relates to a grinder, and particularly to a dual-purpose grinder and an operating method thereof.

### BACKGROUND TECHNOLOGY

The grinder and refiner used in real life, no matter a steel grinder or a ceramic grinder, usually make a material finer and finer by grinding and pressing the material between a moving grinding plate and a stationary grinding plate, so the production efficiency of the grinder and the fineness of ground material both depend on the degree of fitting between the moving grinding plate and the stationary grinding plate.

Existing grinders generally operate manually or automatically. Manual grinders can produce finer ground powder and can control the grinding speed, but the work efficiency is low, while automatic grinders can increase the work efficiency, but the cost is high. At present, there is no grinder that can realize both modes of manual grinding and automatic grinding, thus cannot meet different requirements of users at the same time.

Therefore, it is necessary to design a grinder, which can realize manual grinding, and can also be used with a driving piece to form an automatic grinder, possessing manual and automatic modes to meet the different requirements of users.

### SUMMARY

An objective of the present application is to provide a dual-purpose grinder and an operating method thereof to overcome defects in the prior art.

In order to achieve the above-mentioned objective, the present application provides a dual-purpose grinder, which includes a material container assembly. The material container assembly includes a grinding head fixedly connected to a material container body, and a grinding sleeve rotatably connected to the grinding head. The grinding head is fitted into the grinding sleeve, and the grinding head and the grinding sleeve define therebetween a material compartment for accommodating a material. A connecting structure capable of being connected to an external power assembly is arranged at an upper end of the material container body. When manual grinding is required, the material container body is rotated, and drives the grinding head to rotate, the grinding sleeve moves relative to the grinding head, such that the material between the grinding head and the grinding sleeve is ground into powder. When automatic grinding is required, the material container body is connected to the external power assembly through the connecting structure, and is driven to rotate by the external power assembly, so that the grinding head is driven to rotate, the grinding sleeve moves relative to the grinding head, so that the material between the grinding head and the grinding sleeve is ground into powder.

Further, the connecting structure includes a connecting column, which includes a protruding pillar. A tapered platform is provided on a top end of the protruding pillar, and a diameter of a bottom surface of the tapered platform is larger than a diameter of a cross-section of the protruding pillar.

Further, the connecting structure is further provided with a first recess, and the connecting column is located in the first recess.

Further, a transmission frame is disposed in the material container body, a connecting rod connected to the grinding head is provided on the transmission frame.

Further, the grinding head includes a truncated cone body and a plurality of grinding plates, the plurality of grinding plates are arranged at intervals around a lower end surface of the truncated cone body. The truncated cone body is provided therein with a slot for inserting therein the connecting column. The lower end surface of the truncated cone body is recessed inward to form an adjusting recess, and the adjusting spring is fitted in the adjusting recess.

Further, the material container assembly further includes a fixing frame with positioning columns provided thereon, and positioning grooves into which the positioning columns are inserted are provided on the grinding sleeve. The positioning columns are fitted into the positioning grooves.

Further, the connecting structure includes a lock switch, which includes two inverted buckle sections for clamping the external power assembly.

Further, a connecting frame is disposed in the material container body, and the connecting frame is connected to the grinding head through a grinding head rotating shaft, a second through groove is provided in the connecting frame, and the lock switch is disposed in the second through groove.

Further, a lower end of the grinding head rotating shaft is connected to an adjusting structure for adjusting the size of a gap between the grinding head and the grinding sleeve, and the adjusting structure includes an adjusting spring sleeved on the grinding head rotating shaft and an adjuster connected to the grinding head rotating shaft. The adjusting spring is located between the grinding head and the connecting frame, and the adjuster is located below the grinding head.

The present application further provides an operating method of a dual-purpose grinder, including:
rotating the material container body when manual grinding is required, thus the grinding head is driven to rotate, and the grinding sleeve and the grinding head move relative to each other so that a material is ground and pressed into powder therebetween;
connecting an external power assembly with a connecting structure when automatic grinding is required, the external power assembly drives the material container body to rotate, in order to drive the grinding head to rotate, and the grinding sleeve and the grinding head move relative to each other so that the material is ground and pressed into powder therebetween.

The present application has the following advantageous effects compared with the prior art: by providing a connecting structure on the material container body, an external power assembly may be connected through the connecting structure. The material container assembly may be used alone for manual grinding, or may be matched with the external power assembly to become an automatic grinder. The grinding head and the grinding sleeve move relative to each other via rotation of the material container body. Both manual and automatic modes may be achieved to meet different user requirements.

The present application will be further described below in conjunction with the accompanying drawings and specific embodiments.

### BRIEF DESCRIPTION OF THE DRAWINGS

In order to explain the technical solutions of the embodiments of the present application more clearly, the drawings mentioned in the description of the embodiments will be briefly described. Apparently, the drawings described below are some embodiments of the present application, those skilled in the art can obtain other drawings based on these drawings without creative work.
Fig. 1 is a perspective structural view of the dual-purpose grinder provided by a specific embodiment of the present application;
Fig. 2 is an exploded structural view of the dual-purpose grinder provided by a specific embodiment of the present application;
Fig. 3 is a cross-sectional structural view of the dual-purpose grinder provided by a specific embodiment of the present application;
Fig. 4 is a perspective structural view of the grinding head provided by a specific embodiment of the present application;
Fig. 5 is a perspective structural view of the grinding sleeve provided by a specific embodiment of the present application;
Fig. 6 is a perspective structural view of the transmission frame provided by a specific embodiment of the present application;
Fig. 7 is a perspective structural view of the fixing frame provided by a specific embodiment of the present application;
Fig. 8 is a perspective structural view of the material container body provided by a specific embodiment of the present application;
Fig. 9 is a perspective structural view of the dual-purpose grinder provided by another specific embodiment of the present application;
Fig. 10 is an exploded structural view of the dual-purpose grinder provided by another specific embodiment of the present application;
Fig. 11 is a cross-sectional structural view of the dual-purpose grinder provided by another specific embodiment of the present application;
Fig. 12 is a perspective structural view of the connecting frame provided by another specific embodiment of the present application;
Fig. 13 is a perspective structural view of the grinding head provided by another specific embodiment of the present application;
Fig. 14 is a perspective structural view of the grinding sleeve provided by another specific embodiment of the present application;
Fig. 15 is a perspective structural view of the connecting base provided by another specific embodiment of the present application;
Fig. 16 is a perspective structural view of the fixing base provided by another specific embodiment of the present application; and
Fig. 17 is a perspective structural view of the lock switch provided by another specific embodiment of the present application.

### DETAILED DESCRIPTION OF THE EMBODIMENTS

The technical solutions in the embodiments of the present application will be clearly and completely described in conjunction with the accompanying drawings in the embodiments of the present application. Apparently, the described embodiments are some of the embodiments of the present application, rather than all of them. Based on the embodiments in the present application, all other embodiments obtained by those skilled in the art without creative work shall fall within the scope of protection of the present application.

It should be understood that when used in the specification and the appended claims, the terms "including" and "comprising" indicate the existence of the described features, integers, steps, operations, elements and/or components, but do not exclude the existence or addition of one or more other features, integers, steps, operations, elements, components, and/or collections thereof.

It should also be understood that the terms used in the specification of the present application are only for describing the specific embodiments and are not intended to limit the application. As used in the specification and the appended claims of the present application, unless indicated otherwise in the context, the singular forms "a", "an" and "the" are intended to include plural forms.

It should be further understood that the term "and/or" used in the specification and appended claims of the present application refers to any and all possible combinations of one or more of the associated listed items, and includes these combinations.

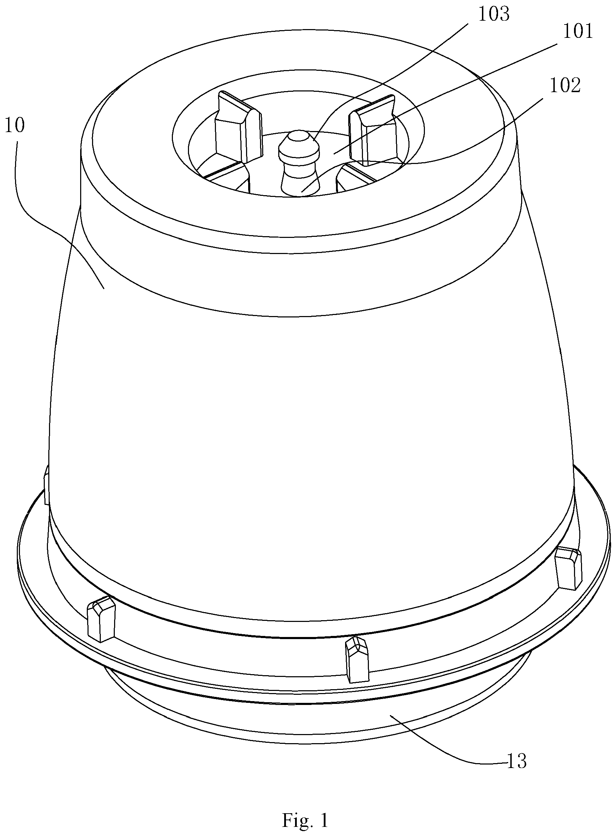

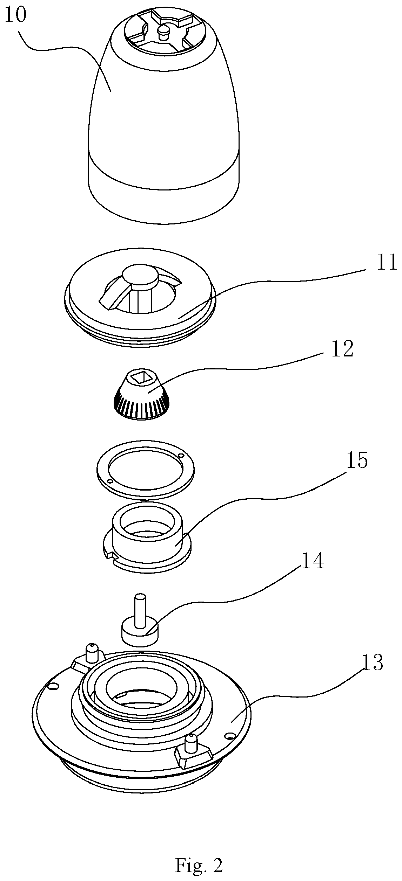

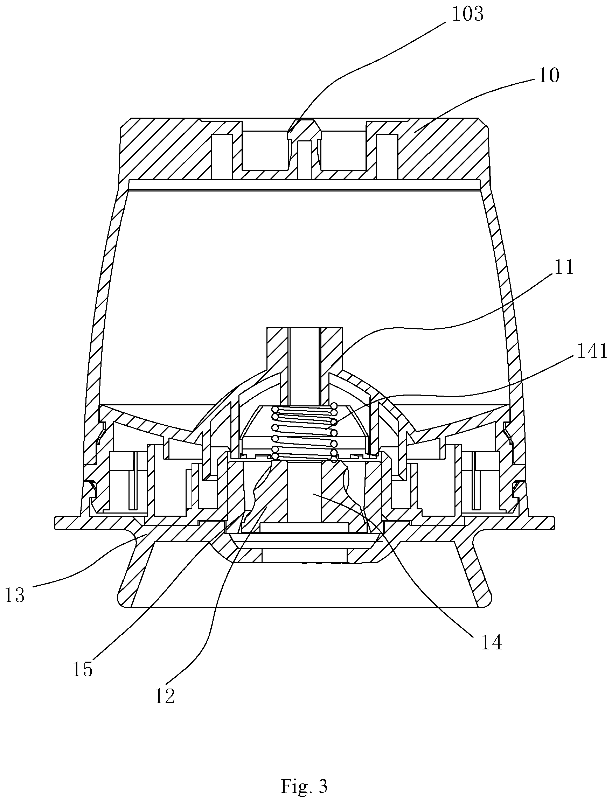

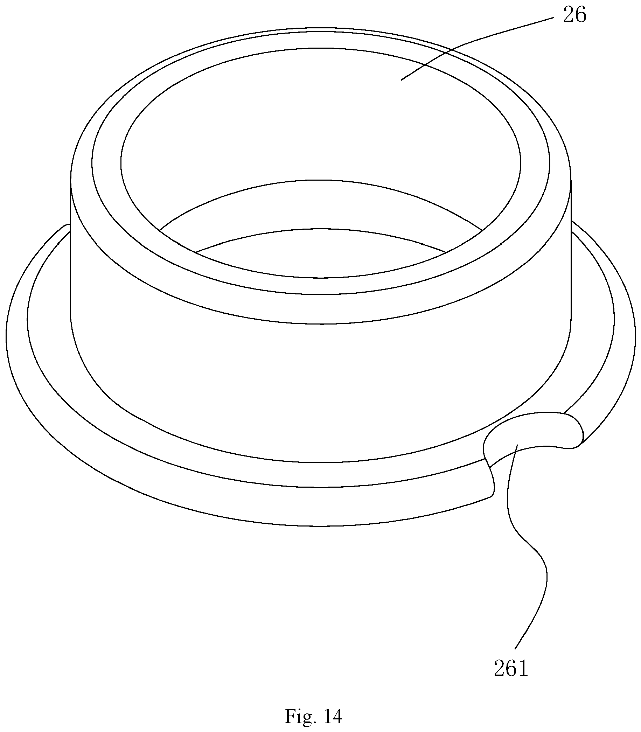

As in the embodiments shown in Figs. 1-17, the dual-purpose grinder provided in the present embodiment is capable of using indoors or outdoors for dual-purpose grinding, including manual grinding and automatic grinding, thereby meeting different user requirements.

The dual-purpose grinder includes a material container assembly. The material container assembly includes a grinding head 12, 27 fixedly connected to a material container body 10, 20, and a grinding sleeve 15, 26 rotatably connected to the grinding head 12, 27. The grinding head 12, 27 is fitted into the grinding sleeve 15, 26, and the grinding head 12, 27 and the grinding sleeve 15, 26 define therebetween a material compartment for accommodating a material. A connecting structure capable of being connected to an external power assembly is arranged at an upper end of the material container body 10, 20. When manual grinding is required, the material container body 10, 20 is rotated, and drives the grinding head 12, 27 to rotate, the grinding sleeve 15, 26 moves relative to the grinding head 12, 27, such that the material between the grinding head 12, 27 and the grinding sleeve 15, 26 is ground into powder. When automatic grinding is required, the material container body 10, 20 is connected to the external power assembly through the connecting structure, and is driven to rotate by the external power assembly, so that the grinding head 12, 27 is driven to rotate, the grinding sleeve 15, 26 moves relative to the grinding head, so that the material between the grinding head 12, 27 and the grinding sleeve 15, 26 is ground into powder.

By arranging a connecting structure on the manual grinding structure, the external power assembly may be connected. The external power assembly supplies power to switch to automatic grinding, which is convenient for conversion and has good practicability.

Referring to Figs. 1 to 8, an embodiment of a dual-purpose grinder is provided. In this embodiment, the connecting structure includes a connecting column, and the connecting column includes a protruding pillar 102. A tapered platform 103 is provided on a top end of the connecting column, and a diameter of a bottom surface of the tapered platform 103 is larger than a diameter of a cross-section of the protruding pillar 102. The protruding pillar 102 and the tapered platform 103 form a step shape. The external power assembly may be a power assembly with a lock switch. The power assembly can be started by locking the lock switch and the connecting column, thereby supplying power to the grinder. In addition, by providing the connecting column and forming the step shape between the protruding pillar 102 and the tapered platform 103, the lock switch may be locked with the connecting column.

When the connecting column is inserted into the lock switch and contacts the center of the lock switch for the first time, a pair of inverted buckle sections of the lock switch is engaged with the connecting column, so that the grinder is integrated with the external power assembly to form a complete automatic grinder. When the connecting column is pushed further into the lock switch and contacts the center of the lock switch for the second time, the pair of inverted buckle sections of the lock switch is released, and the grinder is separated from the external power assembly, thus the external power assembly can be combined with other grinders containing different materials, and the same steps are carried out to form another automatic grinder. Conversion to the external power assembly requires only one step which is simple and efficient, and the grinder that is not connected with the external power assembly may be used as a manual grinder.

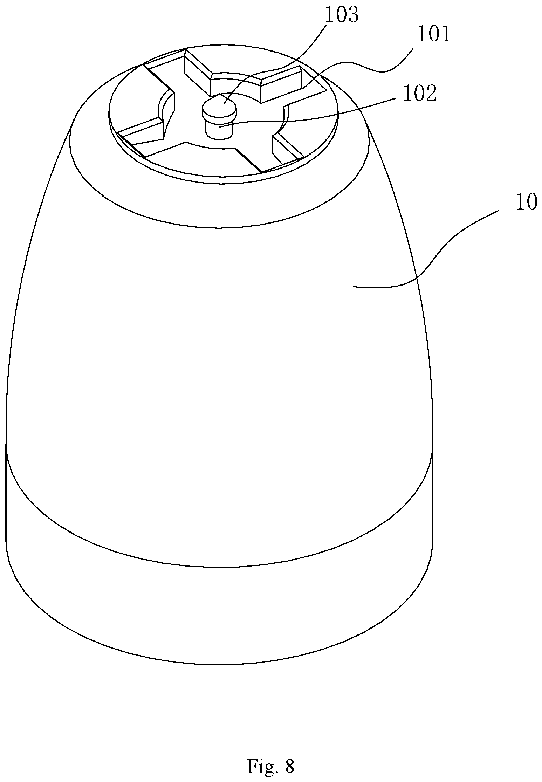

Additionally, referring to Figs. 1 and 8, the connecting structure further includes a first recess 101, and the connecting column is located in the first recess 101. A strut may be provided on the external power assembly to be inserted into the first recess 101, in order to form a stable connecting structure with connections both in the center and the periphery and guide the external power assembly.

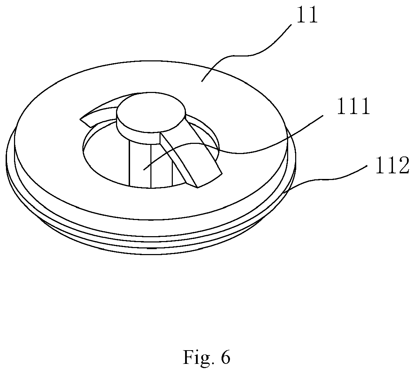

Referring to Fig. 6, a transmission frame 11 is disposed in the material container body 10, a connecting rod 111 connected to the grinding head 12 is provided on the transmission frame 11. The transmission frame 11 is driven to rotate by the rotation of the material container body 10. Since the grinding head 12 is connected to the connecting rod 111, the grinding head 13 is rotated along with the rotation of the transmission frame 11.

Preferably, a protruded ring 112 is provided on an outer periphery of the transmission frame 11, a snapping groove is provided on the above-mentioned material container body 10, and the protruded ring 112 is inserted into the snapping groove so that the transmission frame 11 is connected with the material container body 10, so as to drive the transmission frame 11 to rotate by rotation of the material container body 10.

Preferably, the lower end of the above-mentioned connecting rod 111 is in threaded connection with an adjusting structure for adjusting the size of the gap between the grinding head 12 and the grinding sleeve 15. The adjusting structure includes an adjusting rod 14 and an adjusting spring sleeved on the adjusting rod 14, and the adjusting spring is fitted into the grinding head.

When the adjusting rod 14 is rotated to move upwards, the adjusting spring is compressed by the adjusting rod 14 and the grinding head is forced to move upwards, thus the gap between the grinding head and the grinding sleeve becomes smaller, and the ground powder is finer. When the adjusting rod 14 is rotated to move downwards, the compressing force exerted on the adjusting spring by the adjusting rod 14 is reduced, the grinding head moves downwards, and the gap between the grinding head and the grinding sleeve becomes larger, thus the ground powder is coarser.

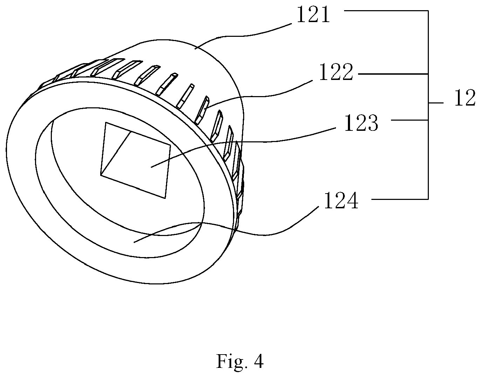

In addition, as shown in Fig. 4, the grinding head 12 includes a truncated cone body 121 and a plurality of grinding plates 122, the plurality of grinding plates 122 are arranged at intervals around a lower end surface of the truncated cone body 121. The truncated cone body 121 is provided therein with a slot for inserting therein the connecting rod 111. The lower end surface of the truncated cone body 121 is recessed inward to form an adjusting recess 124, and the adjusting spring is fitted in the adjusting recess 124. The material is ground and pressed into powder through the cooperation of the grinding plates 122 and the grinding sleeve 15.

In the present embodiment, the above-mentioned connecting rod 111 has a cuboid shape. In other embodiments, the above-mentioned connecting rod 111 may also have other shapes, such as a pentagonal shape. The shape of the slot matches with the shape of the connecting rod 111 for ease of installation.

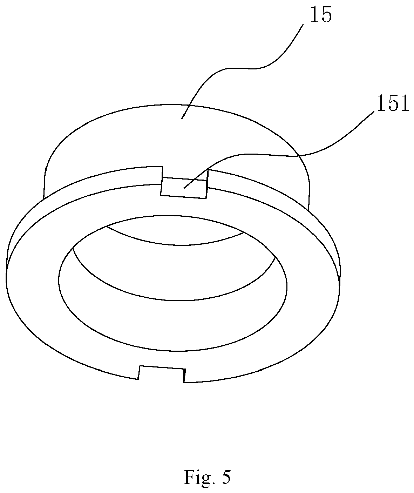

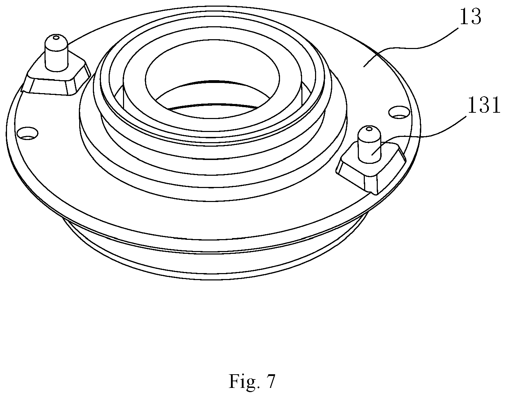

Furthermore, as shown in Figs. 5 and 7, the above-mentioned material container assembly 10 further includes a fixing frame 13, positioning columns 132 are provided on the fixing frame 13, and positioning grooves 151 into which the positioning columns 132 are inserted are provided on the grinding sleeve 15. The fixing frame 13 is connected with the control structure.

A sealed space is formed between the grinding sleeve 15, the fixing frame 13 and the transmission frame 11 when feeding the material, thereby preventing the introduction of other particles, so that the taste of the material is ensured.

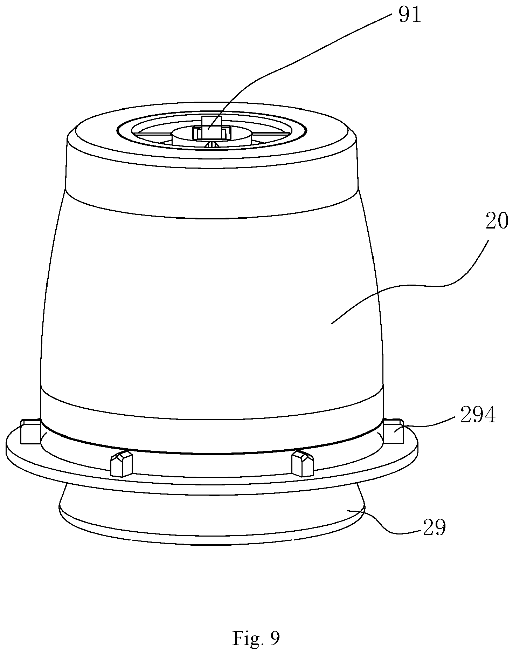

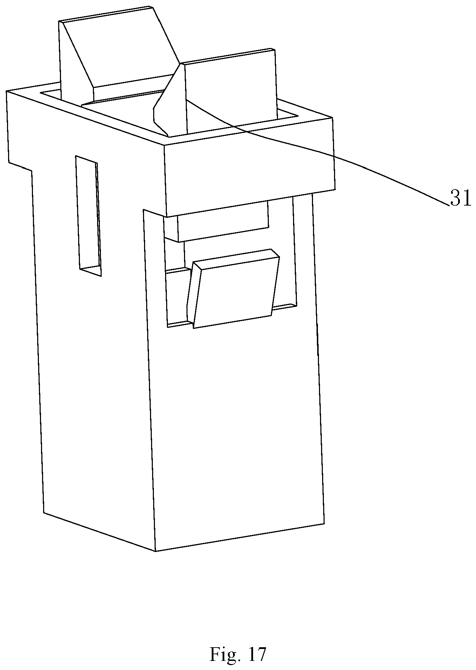

Referring to Figs. 9 to 17, in another embodiment of the dual-purpose grinder, as shown in Fig. 17, the connecting structure includes a lock switch 30, which includes two inverted buckle sections for clamping the external power assembly. The external power assembly may have a connecting column which is to be clamped by the inverted buckle sections. The structure of the connecting column is consistent with the structure of the connecting column in the previous embodiment.

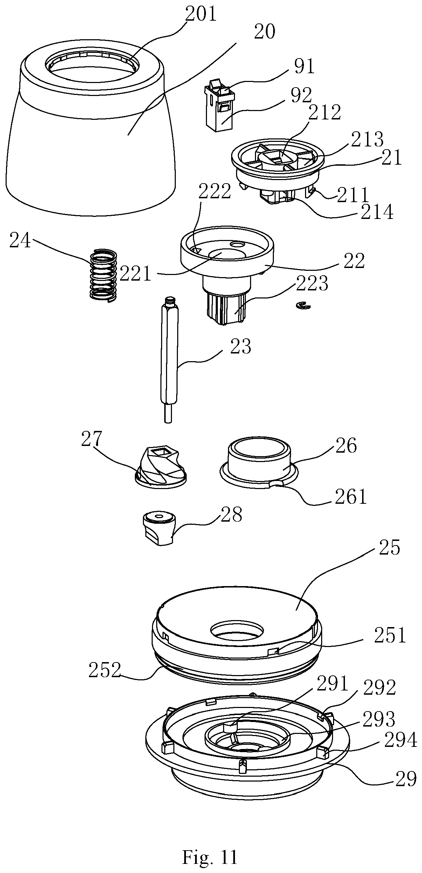

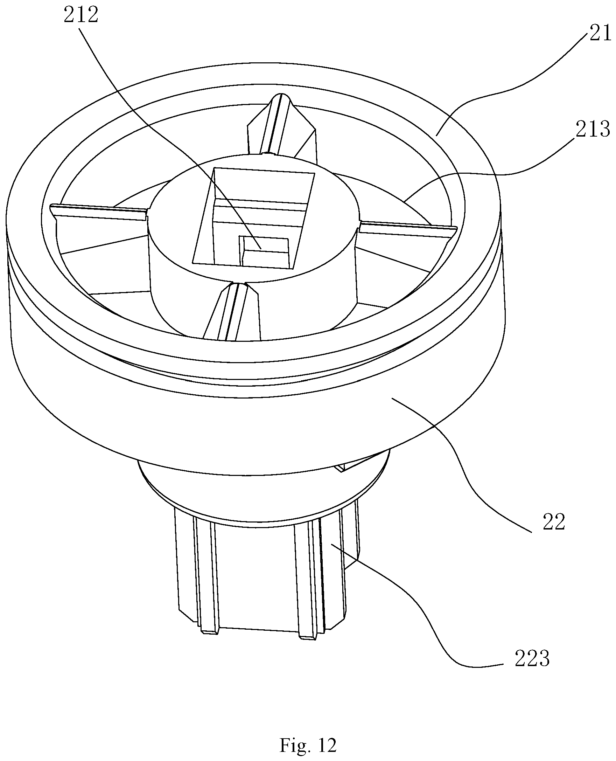

In an embodiment, referring to Figs. 11 and 12, a connecting frame is disposed in the material container body 20, and the connecting frame is connected to the grinding head 27 through a grinding head rotating shaft 23. A second recess 213 is provided in the connecting frame. The external power assembly drives the connecting structure to rotate, and the connecting structure drives the connecting frame to rotate, and the grinding head 27 is driven to rotate by the connecting frame through the grinding head rotating shaft 23, thereby carrying out automatic grinding.

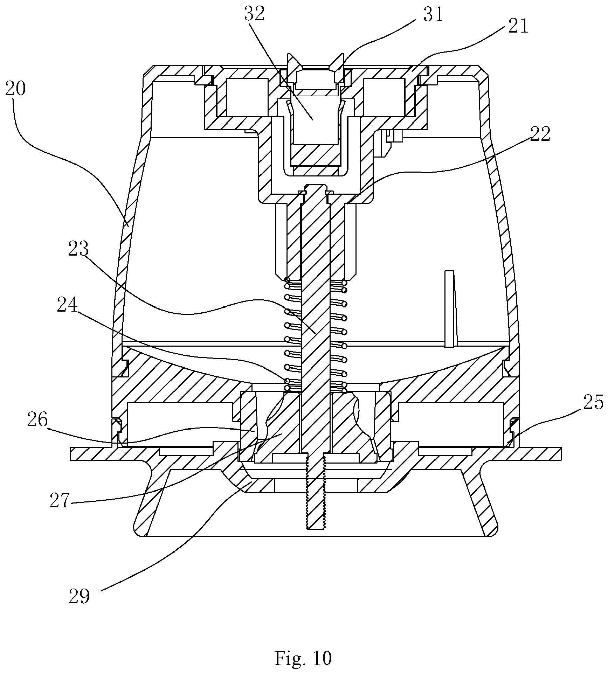

In an embodiment, referring to Figs. 10 and 12, a second through groove 212 is provided in the connecting frame, and the lock switch 30 is disposed in the second through groove 212.

The control structure and the material container assembly are connected using the lock switch 30, so that the control structure drives the material container assembly to carry out grinding.

Specifically, referring to Fig. 12, the above-mentioned connecting frame includes a first connecting frame 21 and a second connecting frame 22. The material container body 20 is provided with a mounting hole with a snapping ring 201 provided therein, and an upper end of the first connecting frame 21 is provided with a snapping edge, which is connected with the snapping ring 201. The above-mentioned second recess 213 is provided on the first connecting frame 21, the second through groove 212 penetrates the first connecting frame 21, and the first connecting frame 21 is connected to the second connecting frame 22. An extending column 223 extends downward from a lower end of the second connecting frame 22, and a rotating shaft slot is provided in the extending column 223, the grinding head rotating shaft 23 is fitted in the rotating shaft slot. Therefore, the rotation of the first connecting frame 21 drives the second connecting frame 22 to rotate, and the rotation of the second connecting frame 22 drives the grinding head rotating shaft 23 to rotate, which in turn drives the grinding head 27 to rotate, thereby carrying out automatic grinding. A compact structure and stable transmission process may be achieved.

Furthermore, specifically, the upper end of the first connecting frame 21 is further provided with a guiding groove, which is arranged adjacent to the first recess 101. The external power assembly and the connecting structure are pressed against and cooperate with each other when mounting the material container body and the external power assembly. Moreover, the guiding groove can drive the grinding head 27 such that the material container body 20 can rotate without moving upwards and downwards, and the grinding head 27 is rotated clockwise when the material container body 20 is rotated clockwise.

In addition, a lower end of the first connecting frame 21 is also provided with a plug 214 and a hook 211, and the second connecting frame 22 is provided with a socket 221 and a hook groove 222. The plug 214 is inserted in the socket 221, and the hook 211 is fitted in the hook groove 222 so as to connect the first connecting frame 21 and the second connecting frame 22.

In an embodiment, referring to Fig. 10, a lower end of the grinding head rotating shaft 23 is connected to an adjusting structure for adjusting the size of a gap between the grinding head 27 and the grinding sleeve 26, and the adjusting structure includes an adjusting spring 24 sleeved on the grinding head rotating shaft 23, and an adjuster 28 connected to the grinding head rotating shaft 23. The adjusting spring 24 is located between the grinding head 27 and the connecting frame, and the adjuster 28 is located below the grinding head 27. Specifically, the adjusting spring 24 is located between the grinding head 27 and the second connecting frame 22.

The grinding head rotating shaft 23 is provided with threads so as to fix the adjuster 28 after rotation.

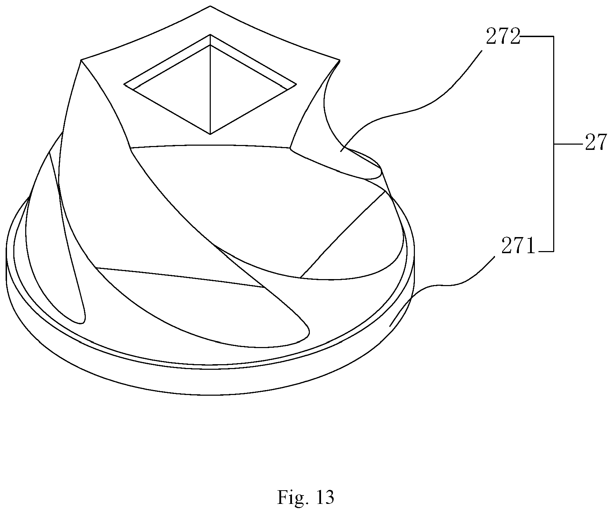

In an embodiment, referring to Fig. 13, the grinding head 27 includes a truncated cone body 271 which is provided with ridged teeth 272.

When the adjuster 28 is rotated to move upwards, the adjusting spring 24 is compressed by the adjuster 28 and the grinding head 27 is forced to move upwards, thus the gap between the grinding head 27 and the grinding sleeve 26 becomes smaller, and the ground powder is finer. When the adjuster 28 is rotated to move downwards, the compressing force exerted on the adjusting spring by the adjusting rod 14 is reduced, the grinding head 27 moves downwards, and the gap between the grinding head 27 and the grinding sleeve 26 becomes larger, thus the ground powder is coarser.

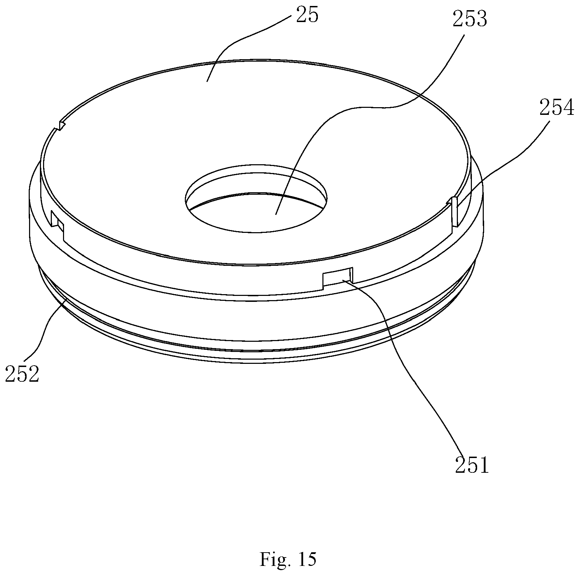

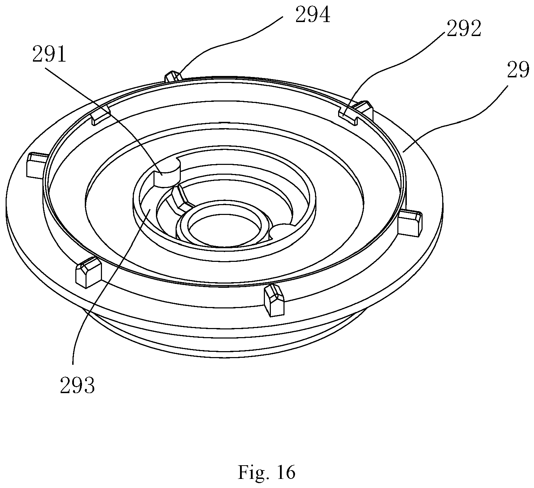

In an embodiment, referring to Figs. 15 and 16, a lower end of the material container body 20 is connected with a connecting base 25 provided with a first through-hole 253. The grinding head 27 is placed in the first through-hole 253, and an upper end of the grinding sleeve 26 is fitted in the first through-hole 253. A lower end of the connecting base 25 is connected with a fixing base 29 having a first through groove, and first fixing blocks 291 are provided on two sides of the first through groove. An outer periphery of the grinding sleeve 26 is provided with notches 261 into which the first fixing blocks 291 are fitted.

In addition, the grinding sleeve 26 is provided with a grinding groove, and the grinding head 27 is placed in the grinding groove of the grinding sleeve 26.

Specifically, an inner side wall of the material container body 20 is provided with second fixing blocks, and the connecting base 25 is provided with connecting grooves 251. The second fixing blocks are engaged into the connecting grooves 251 to connect the material container body 20 with the connecting base 25. The grinding sleeve 26, the grinding head 27 and the material container body 20 are formed into an independent structure through the connecting base 25.

In addition, for ease of assembly of the material container body 20 and the connecting base 25, the material container body 20 is provided with limiting bars, and the connecting base 25 is provided with limiting slots 254 into which the limiting bars are fitted for positioning.

In an embodiment, referring to Fig. 15, an annular groove 252 is provided on an outer periphery of the connecting base 25, and protrusions 292 are provided inside the fixing base 29, and the protrusions 292 are engaged into the annular groove 252, thereby connecting the connecting base 25 with the fixing base 29. With the cooperation between the notches 261 and the first fixing blocks 291, the grinding sleeve 26 may stay stationary while the grinding head 27 is rotated clockwise, so that material can be ground into powder having the same size as the gap between the grinding head 27 and the grinding sleeve 26 through the ridged teeth 272, and fall from the gap to complete the grinding process.

Specifically, a limiting ring 293 is provided in the first through groove, and the limiting ring 293 is located below the first fixing blocks 291 to position the grinding sleeve 26 during mounting.

In the above two embodiments, either the connecting column is arranged on the grinder and the lock switch is arranged on the external power assembly, or the lock switch is arranged on the grinder and the connecting column is arranged on the external power assembly. The lock switches and the connecting columns have the same structure in the two embodiments.

By providing the connecting structure on the material container body 10, 20 to connect with the external power assembly, the above-mentioned dual-purpose grinder may realize manual grinding by using the material container body 10, 20 alone, or form an automatic grinder by the cooperation between the material container body and the external power assembly. By rotating the material container body 10, 20, the grinding head 12, 27 and the grinding sleeve 15, 26 move relatively to each other, such that manual and automatic modes may be realized to meet different user requirements.

Furthermore, the present embodiment also provides an operating method of a dual-purpose grinder, which includes:
when manual grinding is required, rotating the material container body 10, 20 thus the grinding head 12, 27 is driven to rotate. The grinding sleeve 15, 26 and the grinding head 12, 27 move relative to each other, so that the material is ground and pressed into powder between the grinding head 12, 27 and the grinding sleeve 15, 26;
when automatic grinding is required, connecting an external power assembly with a connecting structure. The external power assembly drives the material container body 10, 20 to rotate, in order to drive the grinding head 12, 27 to rotate. The grinding sleeve 15, 26 and the grinding head 12, 27 move relative to each other so that the material is ground and pressed into powder therebetween.

It should be noted that those skilled in the art can clearly understand that the specific implementation process of the operating method of the above-mentioned dual-purpose grinder can refer to the corresponding description in the foregoing embodiment of the dual-purpose grinder, and will not be repeated herein for the purpose of brevity.

The technical content of this application is further explained by the above examples only for easier understanding of readers, but the implementation of the present application is not limited thereto. Any technical extension or re-creation made according to the present application is subject to the protection of the present application. The scope of protection of the present application is defined in accordance with the claims.

## Claims

1. A dual-purpose grinder, **characterized in that** the dual-purpose grinder comprises: a material container assembly including a grinding head fixedly connected to a material container body and a grinding sleeve rotatably connected to the grinding head, wherein the grinding head is fitted into the grinding sleeve, the grinding head and the grinding sleeve define therebetween a material compartment for accommodating a material, a connecting structure capable of being connected to an external power assembly is arranged at an upper end of the material container body; when manual grinding is required, the material container body is rotated and drives the grinding head to rotate, the grinding sleeve moves relative to the grinding head, so that the material between the grinding head and the grinding sleeve is ground into powder; when automatic grinding is required, the material container body is connected to the external power assembly through the connecting structure and is driven to rotate by the external power assembly, so that the grinding head is driven to rotate, the grinding sleeve moves relative to the grinding head, so that the material between the grinding head and the grinding sleeve is ground into powder.

2. The dual-purpose grinder of claim 1, **characterized in that** the connecting structure further comprises a connecting column, which includes a protruding pillar, a tapered platform is provided on a top end of the protruding pillar, and a diameter of a bottom surface of the tapered platform is larger than a diameter of a cross-section of the protruding pillar.

3. The dual-purpose grinder of claim 2, **characterized in that** the connecting structure further comprises a first recess, and the connecting column is located in the first recess.

4. The dual-purpose grinder of any one of claims 1 to 3, **characterized in that** a transmission frame is disposed in the material container body, a connecting rod connected to the grinding head is provided on the transmission frame.

5. The dual-purpose grinder of claim 4, **characterized in that** the grinding head comprises a truncated cone body and a plurality of grinding plates, the plurality of grinding plates are arranged at intervals around a lower end surface of the truncated cone body, and the truncated cone body is provided therein with a slot for inserting therein the connecting column, the lower end surface of the truncated cone body is recessed inward to form an adjusting recess, and the adjusting spring is fitted in the adjusting recess.

6. The dual-purpose grinder of claim 5, **characterized in that** the material container assembly further comprises a fixing frame with positioning columns provided thereon, positioning grooves into which the positioning columns are inserted are provided on the grinding sleeve, and the positioning columns are fitted into the positioning grooves.

7. The dual-purpose grinder of claim 1, **characterized in that** the connecting structure comprises a lock switch, which includes two inverted buckle sections for clamping the external power assembly.

8. The dual-purpose grinder of claim 7, **characterized in that** a connecting frame is disposed in the material container body, and the connecting frame is connected to the grinding head through a grinding head rotating shaft, a second through groove is provided in the connecting frame, and the lock switch is disposed in the second through groove.

9. The dual-purpose grinder of claim 8, **characterized in that** a lower end of the grinding head rotating shaft is connected to an adjusting structure for adjusting a size of a gap between the grinding head and the grinding sleeve, and the adjusting structure includes an adjusting spring sleeved on the grinding head rotating shaft and an adjuster connected to the grinding head rotating shaft, the adjusting spring is located between the grinding head and the connecting frame, and the adjuster is located below the grinding head.

10. An operating method of a dual-purpose grinder, **characterized in that** the operating method comprises:
rotating a material container body when manual grinding is required, thus a grinding head is driven to rotate, and a grinding sleeve and the grinding head move relative to each other so that a material is ground and pressed into powder between the grinding head and the grinding sleeve;
connecting an external power assembly with a connecting structure when automatic grinding is required, the external power assembly drives the material container body to rotate, in order to drive the grinding head to rotate, and the grinding sleeve and the grinding head move relative to each other so that the material is ground and pressed into powder therebetween.
